# EUROPÄISCHE PATENTSCHRIFT

(11) **EP 0 682 693 B1**
(45) Veröffentlichungstag und Bekanntmachung des Hinweises auf die Patenterteilung: **01.04.1998**
(21) Anmeldenummer: 94906159.2
(22) Anmeldetag: 27.01.1994
(51) Int. Cl.: C11D 3/37, C11D 3/12

(54) **GERÜSTSTOFF FÜR WASCH- ODER REINIGUNGSMITTEL**
BUILDER FOR DETERGENTS OR CLEANSERS
ADJUVANT POUR DETERGENTS OU NETTOYANTS

(30) Priorität: 05.02.1993 DE 4303449; 22.02.1993 DE 4305396
(43) Veröffentlichungstag der Anmeldung: 22.11.1995
(73) Patentinhaber: Henkel Kommanditgesellschaft auf Aktien, 40191 Düsseldorf (DE)
(72) Erfinder: KOTTWITZ, Beatrix, D-40593 Düsseldorf (DE); POETHKOW, Jörg, D-40229 Düsseldorf (DE); KRINGS, Peter, D-47807 Krefeld (DE); UPADEK, Horst, D-40883 Ratingen (DE)
(86) Internationale Anmeldenummer: EP9400229
(87) Internationale Veröffentlichungsnummer: WO9418296

(56) Entgegenhaltungen:
- EP-A- 0 193 360
- EP-A- 0 398 724
- EP-A- 0 441 022
- EP-A- 0 497 611
- WO-A-94/18296
- S.Ö.F.W., 117 Jg.,Nr.19 (1991) S. 740-744

## Beschreibung

Die Erfindung betrifft ein Wasch- oder Reinigungsmittel, das als Inkrustationsinhibitoren abbaubare polymere Polycarboxylate enthält, eine Gerüststoffkombination für Wasch- oder Reinigungsmittel sowie jeweils Verfahren zur Herstellung des Mittels und der Gerüststoffkombination.

In der Praxis wurden zumeist polymere Polycarboxylate auf Basis homo- und copolymerer Acrylsäure oder Maleinsäure bzw. deren Salzen als Inkrustationsinhibitoren eingesetzt. Insbesondere waren dabei copolymere Salze bevorzugt, die nur aus den Monomeren der (Meth-)acrylsäure und/oder Maleinsäure aufgebaut sind. Als Nachteil dieser Polymere muß jedoch angesehen werden, daß sie schwer biologisch abbaubar sind.

Aus der europäischen Patentanmeldung EP-A-0 193 360 sind Wasch- oder Reinigungsmittel, insbesondere Textilwaschmittel, bekannt, welche 5 bis 60 Gew.-% anionische, nichtionische und/oder kationische Tenside, Buildersubstanzen sowie zusätzlich terpolymere Polycarbonsäuren und/oder terpolymere Polycarboxylate, aufgebaut aus den Momomereinheiten einer monoethylenisch ungesättigten C₃-C₁₀-Monocarbonsäure, einer monoethylenisch ungesättigten C₄-C₆-Dicarbonsäure sowie eines nichtionischen Spacers, der beispielsweise ein monoethylenisch ungesättigter C₂-C₆-Alkohol oder ein Derivat hiervon wie ein C₁-C₆-Alkyl- oder Hydroxyalkylester eines monoethylenisch ungesättigten C₂-C₆-Alkohols sein kann, enthalten. Bevorzugte nichtionische Spacer sind Vinylacetat oder Vinylalkohol; bevorzugte Terpolymere dieser Art weisen außerdem ein Gewichtsverhältnis der Monocarbonsäure zur Dicarbonsäure von 1:1 auf. Es wird jedoch weder offenbart, daß Terpolymere dieser Art biologisch abbaubar sein können, noch, welche innere Struktur die Terpolymere besitzen müssen, damit sie eine biologische Abbaubarkeit aufweisen, und auf welche Weise derartige biologisch abbaubare Terpolymere erhalten werden können.

Die europäische Patentanmeldung EP-A-0 398 724 beschreibt einen kontinuierlichen oder batchweisen Prozeß zur Herstellung von Copolymeren aus monoethylenisch ungesättigten aliphatischen Dicarbonsäuren mit Comonomeren aus der Gruppe der monoethylenisch ungesättigten Monocarbonsäuren und der ungesättigten carboxylfreien Monomere. Hierbei werden die Monomere mit allen anderen für die Polymerisation erforderlichen Reagenzien gleichzeitig in das Reaktionsgefäß eingebracht. Die biologische Abbaubarkeit der Polymere wird nicht besonders hervorgehoben, wobei Werte hierzu in drei Versuchsbeispielen angegeben werden.

Auch die europäische Patentanmeldung EP-A-0 441 022 beschreibt einen Prozeß zur Herstellung von Copolymeren aus monoethylenisch ungesättigten aliphatischen Dicarbonsäuren (beispielsweise Maleinsäure) mit Comonomeren aus der Gruppe der monoethylenisch ungesättigten Monocarbonsäuren (beispielsweise Acrylsäure) und der ungesättigten carboxylfreien Monomere (beispielsweise Acrylsäurealkylester). Die Polymerisation wird hierbei als Emulsionspolymerisation in Wasser in Gegenwart geringer Mengen an Kupferionen durchgeführt. Die biologische Abbaubarkeit der Polymere wird ausgelobt, aber nicht durch Meßwerte beschrieben.

Die EP-A-0 497 611 beschreibt die Herstellung und Verwendung von verbesserten und teilweise biologisch abbaubaren Polymeren auf der basis Maleinsäure, Acrylsäure und Vinylacetat, die in einem organischen Lösungsmittel polymerisiert und anschließend wäßrig hydrolisiert werden. Die biologische Abbaubarkeit der Terpolymeren nach der EP-A-0 497 611 wird in einem Closed-Bottle-Test geprüft, wobei nur geringe Abbaugrade erreicht werden.

Die Aufgabe der Erfindung bestand darin, Waschmittel mit sowohl hohem Primär- als auch Sekundärwaschvermögen bereitzustellen, die als Inkrustationsinhibitoren biologisch abbaubare Polymere enthalten.

Gegenstand der Erfindung ist dementsprechend ein Wasch- oder Reinigungsmittel, insbesondere ein Textilwaschmittel, enthaltend 5 bis 60 Gew.-% anionische, nichtionische und/oder kationische Tenside, 10 bis 65 Gew.-% kristalline Schichtsilikate der allgemeinen Formel (I) NaMSiₓO₂ₓ₋₁·yH₂O, wobei M Natrium oder Wasserstoff bedeutet, x eine Zahl von 1,9 bis 4 und y eine Zahl von 0 bis 20 ist und bevorzugte Werte für x 2, 3 oder 4 sind, oder ein Gemisch aus kristallinen Schichtsilikaten (I) und wasserhaltigem Zeolith sowie 2 bis 20 Gew.-% terpolymere Polycarbonsäuren und/oder terpolymere Polycarboxylate, aufgebaut aus den Monomereinheiten einer monoethylenisch ungesättigten C₃-C₁₀-Monocarbonsäure, einer monoethylenisch ungesättigten Dicarbonsäure sowie eines monoethylenisch ungesättigten C₂-C₆-Alkohols oder eines Derivats, wobei es ein biologisch abbaubares Terpolymer aus den aus den Monomereinheiten einer monoethylenisch ungesättigten C₃-C₈-Monocarbonsäure, einer monoethylenisch ungesättigten C₄-C₈-Dicarbonsäure und Vinylalkohol und/oder einem Vinylalkohol-Derivat und/oder den Salzen einer monoethylenisch ungesättigten C₃-C₈-Monocarbonsäure und einer monoethylenisch ungesättigten C₄-C₈-Dicarbonsäure sowie Vinylalkohol und/oder einem Vinylalkohol-Derivat enthält, das durch radikalische Polymerisation und Hydrolyse oder Verseifung in wäßrigem Medium hergestellt ist.

Die erfindungsgemäß eingesetzten Terpolymeren enthalten zwei Carbonsäuren und/oder deren Salze sowie Vinylalkohol und/oder ein Vinylalkohol-Derivat als monomere Einheiten. Das erste saure Monomer bzw. dessen Salz leitet sich von einer monoethylenisch ungesättigten C₃-C₈-Monocarbonsäure und vorzugsweise von einer C₃-C₄-Monocarbonsäure, insbesondere von der (Meth-)acrylsäure ab. Das zweite saure Monomer bzw. dessen Salz ist ein Derivat einer C₄-C₈-Dicarbonsäure, vorzugsweise einer C₄-C₆-Dicarbonsäure, wobei Maleinsäure insbesondere bevorzugt ist. Die dritte monomere Einheit wird dabei von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von C₁-C₄-Carbonsäuren, mit Vinylalkohol darstellen. Bevorzugte Terpolymere enthalten dabei 60 bis 95 Gew.-%, insbesondere 70 bis 92 Gew.-% (Meth)acrylsäure bzw. (Meth)acrylat, mit besonderer Bevorzugung von Acrylsäure bzw. Acrylat, und Maleinsäure bzw. Maleat, wobei sowohl die Mengen als auch die Gewichtsverhältnisse auf die Säuren bezogen sind, sowie 5 bis 40 Gew.-%, vorzugsweise 8 bis 30 Gew.-% und insbesondere 10 bis 20 Gew.-% Vinylalkohol und/oder Vinylacetat. Ganz besonders bevorzugt sind dabei Terpolymere, in denen das Gewichtsverhältnis (Meth)acrylsäure bzw. (Meth)acrylat zu Maleinsäure bzw. Maleat zwischen 1:1 und 4:1 liegt, vorzugsweise größer als 1:1 ist und insbesondere zwischen 2:1 und 3:1 liegt. Besonders vorteilhaft sind Gewichtsverhältnisse zwischen 2:1 und 2,5:1.

Die Herstellung von Copolymeren allgemeiner Art aus den drei genannten Monomeren ist bekannt. Im allgemeinen wird dazu von Vinylestern und den genannten Säuren oder deren Derivaten ausgegangen, woraufhin dann die polymeren Vinylester zu den Alkoholen verseift werden. Die erfindungsgemäß eingesetzten Terpolymere hingegen werden nach dem in der W0-A-94/15978 beschriebenen Verfahren hergestellt, wobei eine besondere innere Struktur der Terpolymere erhalten wird, die für die biologische Abbaubarkeit der Terpolymere verantwortlich ist. Anhand der bekannten unterschiedlichen Reaktionsgeschwindigkeiten der einzelnen Monomeren im Polymerisationsprozeß ist es dem Fachmann möglich, durch Variationen von Vorlagen eines oder mehrerer Monomeren und der Zugabereihenfolge und gegebenenfalls auch der Zugabegeschwindigkeit des oder der restlichen Monomeren sowie durch Variation der Mengen der einzelnen Monomeren, gezielt innere Strukturen von Polymeren aufzubauen. Dabei kann diese innere Struktur in den Extremfällen ein regulär alternierendes Terpolymer oder drei Homopolymere darstellen; in den meisten Fällen wird das Ergebnis jedoch zwischen diesen Extremen liegen. Die in der W0-A-94/15978 beschriebene innere Struktur ist dabei für die biologische Abbaubarkeit der Terpolymere verantwortlich. In einer bevorzugten Ausführungsform der vorliegenden Erfindung werden dabei Terpolymere eingesetzt, die insbesondere die gemäß der Lehre der WO-A-94/15978 durch Umsetzung der monomeren Säuren und einem veresterten Vinylalkohol und insbesondere Vinylacetat erhalten werden, woraufhin im Anschluß gegebenenfalls eine Neutralisation der Säuren zu vorzugsweise ihren Alkalisalzen, wie den Natrium- oder Kaliumsalzen, oder Ammoniumsalzen oder Alkanolaminsalzen, wie dem Monoethanolaminsalz oder dem Triethanolaminsalz, sowie gegebenenfalls eine partielle oder vollständige Spaltung des veresterten Vinylalkohols zum Vinylalkohol durchgeführt wird.

Analog zu den bekannten (co-)polymeren Polycarbonsäuren bzw. Polycarboxylaten wie den homo- oder copolymeren Acrylsäuren bzw. Acrylaten sind auch solche Terpolymere bevorzugt, die entweder vollständig oder zumindest partiell, insbesondere zu mehr als 50 %, bezogen auf die vorhandenen Carboxylgruppen, neutralisiert sind. Besonders bevorzugt ist dabei ein vollständig neutralisiertes Terpolymer, das also aus den Salzen der monomeren Säuren, insbesondere den Natrium- oder Kaliumsalzen der monomeren Säuren, und Vinylalkohol besteht. Die Terpolymere weisen im allgemeinen eine relative Molekülmasse zwischen 1000 und 200000, vorzugsweise zwischen 2000 und 50000 und insbesondere zwischen 3000 und 10000 auf. Sie werden zumeist in Form wäßriger Lösungen, vorzugsweise in Form 30 bis 50 Gew.-%iger wäßriger Lösungen eingesetzt.

Erfindungsgemäße Mittel enthalten das Terpolymer vorzugsweise in Mengen von 0,5 bis 30 Gew.-% und insbesondere in Mengen von 2 bis 25 Gew.-%. Weiterhin ist es bevorzugt, daß die Mittel außer den Terpolymeren ein oder mehrere Inhaltsstoffe aus der Gruppe der alkalischen anorganischen Salze und üblicherweise in Wasch- oder Reinigungsmitteln eingesetzten Buildersubstanzen enthalten.

Zu den alkalischen anorganischen Salzen gehören die wasserlöslichen Bicarbonate, Carbonate, amorphen Silikate oder Mischungen aus diesen; insbesondere werden Alkalicarbonat und Alkalisilikat, vor allem Natriumsilikat mit einem molaren Verhältnis Na₂O : SiO₂ von 1:1 bis 1:4,5, vorzugsweise von 1:2 bis 1:3,5, eingesetzt. Der Gehalt der Mittel an Alkalicarbonat und/oder Bicarbonat kann 0 bis etwa 20 Gew.-% betragen, der Gehalt der Mittel an amorphem Natriumsilikat beträgt im allgemeinen 0 bis etwa 10 Gew.-%.

Zu den bekannten und üblicherweise in Wasch- oder Reinigungsmitteln eingesetzten Buildersubstanzen gehören in erster Linie Phosphate, Zeolithe und Schichtsilikate, wobei Zeolithe und kristalline Schichtsilikate bevorzugt sind. Der eingesetzte feinkristalline, synthetische und gebundenes Wasser enthaltende Zeolith ist vorzugsweise Zeolith NaA in Waschmittelqualität. Geeignet sind jedoch auch Zeolith NaX sowie Mischungen aus A, X und/oder P. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 um (Volumenverteilung; Meßmethode: Coulter Counter) auf und enthalten vorzugsweise 18 bis 22 Gew.-%, insbesondere 20 bis 22 Gew.-% an gebundenem Wasser. Mengenangaben zu Zeolith beziehen sich, sofern nichts anderes gesagt wird, immer auf den wasserhaltigen Zeolith.

Geeignete Substitute bzw. Teilsubstitute für Phosphate und Zeolithe sind kristalline, schichtförmige Natriumsilikate der allgemeinen Formel (I) NaMSiₓO₂ₓ₊₁·yH₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilikate werden beispielsweise in der europäischen Patentanmeldung EP-A-0 164 514 beschrieben. Bevorzugte kristalline Schichtsilikate der allgemeinen Formel (I) sind solche, in denen M für Natrium steht und x die Werte 2 oder 3 annimmt. Insbesondere sind sowohl β- als auch δ-Natriumdisilikate Na₂Si₂O₅·yH₂O bevorzugt.

Die erfindungsgemäßen Mittel enthalten kristalline Schichtsilikate (I) in Mengen von 10 bis 65 Gew.-%.

Brauchbare organische Gerüstsubstanzen sind beispielsweise die bevorzugt in Form ihrer Natriumsalze eingesetzten Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Ihr Gehalt in den Mitteln beträgt vorzugsweise 0 bis 20 Gew.-%.

In einer bevorzugten Ausführungsform der Erfindung enthalten die Mittel 0,5 bis 30 Gew.-%, vorzugsweise 2 bis 25 Gew.-% Terpolymer, 0 bis 20 Gew.-%, vorzugsweise 5 bis 15 Gew.-% anorganische Carbonate und/oder Bicarbonate und 0 bis 20 Gew.-%, vorzugsweise 5 bis 15 Gew.-% Salze organischer Polycarbonsäuren.

In einer weiteren bevorzugten Ausführungsform der Erfindung enthalten die Mittel 10 bis 65 Gew.-% kristalline Schichtsilikate (I) oder ein Gemisch aus kristallinen Schichtsilikaten (I) und wasserhaltigem Zeolith und 2 bis 20 Gew.-% Terpolymer, insbesondere aus den Salzen der Acrylsäure und der Maleinsäure sowie Vinylalkohol.

In einer weiteren bevorzugten Ausführungsform der Erfindung enthalten die Mittel 20 bis 40 Gew.-% kristalline Schichtsilikate (I), oder ein Gemisch aus kristallinen Schichtsilikaten (I) und Zeolith, 5 bis 15 Gew.-% Natriumcarbonat, 0 bis 10 Gew.-%, vorzugsweise 2 bis 5 Gew.-% amorphe Silikate und 3 bis 15 Gew.-% Terpolymer.

In einer weiteren bevorzugten Ausführungsform der Erfindung enthalten die Mittel 10 bis 35 Gew.-%, vorzugsweise 12,5 bis 30 Gew.-% kristalline Schichtsilikate (I) und 2 bis 10 Gew.-%, vorzugsweise 2,5 bis 8 Gew.-% Terpolymer, sind aber insbesondere frei von Zeolith. Diese Mittel weisen ein sehr gutes Primärwaschvermögen und eine sehr gute Inkrustationsinhibierung auf. Mittel, welche zusätzlich etwa 2 bis 10 Gew.-% Carbonate und/oder Bicarbonate, vorzugsweise Natriumcarbonat und/oder Natriumbicarbonat, aufweisen, zeichnen sich außerdem auch durch eine verbesserte Vergrauungsinhibierung aus.

Ebenso bevorzugt ist eine Ausführungsform der Erfindung, wobei die Mittel Terpolymer und Salze organischer Polycarbonsäuren im Verhältnis 1:4 bis 4:1 enthalten.

Weitere geeignete Gerüststoffe sind Oxidationsprodukte von carboxylgruppenhaltigen Polyglucosanen und/oder deren wasserlöslichen Salzen, wie sie beispielsweise in der internationalen Patentanmeldung WO-A-93/08251 beschrieben werden oder deren Herstellung beispielsweise in der internationalen Patentanmeldung WO-A-93/16110, beschrieben wird.

Weiterhin können die erfindungsgemäßen Mittel zusätzlich zu dem Terpolymer bekannte und übliche (co-)polymere Polycarboxylate enthalten. Geeignete polymere Polycarboxylate sind beispielsweise die Natriumsalze der Polyacrylsäure oder der Polymethacrylsäure, beispielsweise solche mit einer relativen Molekülmasse von 800 bis 150000 (auf Säure bezogen). Geeignete copolymere Polycarboxylate sind insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 5000 bis 200000, vorzugsweise 10000 bis 120000 und insbesondere 50000 bis 100000 vorteilhafterweise werden dabei Handelsprodukte wie Sokalan CP 5^{(R)} oder Alcosperse^{(R)} eingesetzt. Dabei sind Mittel bevorzugt, die das Terpolymer und übliche homo- oder copolymere Acrylate im Gewichtsverhältnis 2:3 bis 3:2 enthalten. Insbesondere sollen die Mittel jedoch nicht mehr als etwa 2 Gew.-% der üblichen homo- oder copolymeren Acrylate enthalten.

Als weitere übliche Inhaltsstoffe enthalten die erfindungsgemäßen Mittel, welche in fester, granularer oder flüssiger bis pastöser Form vorliegen können, insbesondere 10 bis 40 Gew.-% anionische, nichtionische, amphotere, zwitterionische und/oder kationische Tenside.

Als anionische Tenside werden beispielsweise solche vom Typ der Sulfonate und Sulfate eingesetzt. Als Tenside vom Sulfonat-Typ kommen vorzugsweise C₉-C₁₃-Alkylbenzolsulfonate, Olefinsulfonate, d.h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen beispielsweise durch Sulfochlorierung oder Sulfoxidation mit anschließender Hydrolyse bzw. Neutralisation gewonnen werden.

Geeignet sind auch die Ester von α-Sulfofettsäuren (Estersulfonate), z.B. die α-sulfonierten Methylester der hydrierten Kokos-, Palmkern- oder Talgfettsäuren. Insbesondere kommen Ester von α-Sulfofettsäuren (Estersulfonate), die durch α-Sulfonierung der Methylester von Fettsäuren pflanzlichen und/oder tierischen Ursprungs mit 8 bis 20 C-Atomen im Fettsäuremolekül und nachfolgende Neutralisation zu wasserlöslichen Mono-Salzen hergestellt werden, in Betracht. Vorzugsweise handelt es sich hierbei um die α-sulfonierten Ester der hydrierten Kokos-, Palmkern- oder Talgfettsäuren, wobei auch Sulfonierungsprodukte von ungesättigten Fettsäuren, beispielsweise Ölsäure, in geringen Mengen, vorzugsweise in Mengen nicht oberhalb etwa 2 bis 3 Gew.-%, vorhanden sein können. Insbesondere sind α-Sulfofettsäurealkylester bevorzugt, die eine Alkylkette mit nicht mehr als 4 C-Atomen in der Estergruppe aufweisen, beispielsweise Methylester, Ethylester, Propylester und Butylester. Mit besonderem Vorteil werden die Methylester der α-Sulfofettsäuren (MES) eingesetzt. Weitere geeignete Aniontenside sind die durch Esterspaltung der α-Sulfofettsäurealkylester erhältlichen α-Sulfofettsäuren bzw. ihre Di-Salze. Die Mono-Salze der α-Sulfofettsäurealkylester fallen schon bei ihrer großtechnischen Herstellung als wäßrige Mischung mit begrenzten Mengen an Di-Salzen an. Der Disalz-Gehalt solcher Tenside liegt üblicherweise unter 50 Gew.-% des Aniontensidgemisches, beispielsweise bis etwa 30 Gew.-%. Im Rahmen dieser Erfindung werden die bezüglich der α-Sulfofettsäurealkyl ester angegebenen Mengen immer als Summe der Mengen des α-Sulfofettsäurealkylester-Monosalzes und des entsprechenden α-Sulfofettsäure-Disalzes verstanden. Auch Mischungen von Mono-Salzen und Di-Salzen mit weiteren Tensiden, beispielsweise mit Alkylbenzolsulfonat, sind bevorzugt.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung durch ein Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure. Geht man dabei von Fetten und Ölen, also natürlichen Gemischen unterschiedlicher Fettsäureglycerinester aus, so ist es erforderlich, die Einsatzprodukte vor der Sulfierung in an sich bekannter Weise mit Wasserstoff weitgehend abzusättigen, d.h. auf Iodzahlen kleiner 5, vorteilhafterweise kleiner 2 zu härten. Typische Beispiele geeigneter Einsatzstoffe sind Palmöl, Palmkernöl, Palmstearin, Olivenöl, Rüböl, Korianderöl, Sonnenblumenöl, Baumwollsaatöl, Erdnußöl, Leinöl, Lardöl oder Schweineschmalz. Aufgrund ihres hohen natürlichen Anteils an gesättigten Fettsäuren hat es sich jedoch als besonders vorteilhaft erwiesen, von Kokosöl, Palmkernöl oder Rindertalg auszugehen. Die Sulfierung der gesättigten Fettsäuren mit 6 bis 22 Kohlenstoffatomen oder der Mischungen aus Fettsäureglycerinestern mit Iodzahlen kleiner 5, die Fettsäuren mit 6 bis 22 Kohlenstoffatomen enthalten, erfolgt vorzugsweise durch Umsetzung mit gasförmigem Schwefeltrioxid und anschließender Neutralisierung mit wäßrigen Basen, wie sie in der internationalen Patentanmeldung WO-A-91/09009 angegeben ist.

Die Sulfierprodukte stellen ein komplexes Gemisch dar, das Mono-, Di- und Triglyceridsulfonate mit α-ständiger und/oder innenständiger Sulfonsäuregruppierung enthält. Als Nebenprodukte bilden sich sulfonierte Fettsäuresalze, Glyceridsulfate, Glycerinsulfate, Glycerin und Seifen. Geht man bei der Sulfierung von gesättigten Fettsäuren oder gehärteten Fettsäureglycerinestergemischen aus, so kann der Anteil der α-sulfonierten Fettsäure-Disalze je nach Verfahrensführung durchaus bis etwa 60 Gew.-% betragen.

Als Alk(en)ylsulfate werden die Schwefelsäurehalbester der C₁₂-C₁₈-Fettalkohole beispielsweise aus Kokosfettalkohol, Talgfettalkohol, Lauryl-, Myristyl-, Cetyl- oder Stearylalkohol, oder aus den C₁₀-C₂₀-Oxoalkoholen, und diejenigen Halbester sekundärer Alkohole dieser Kettenlänge bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind C₁₆-C₁₈-Alk(en)ylsulfate insbesondere bevorzugt. Dabei kann es auch von besonderem Vorteil und insbesondere für maschinelle Waschmittel von Vorteil sein, C₁₆-C₁₈-Alk(en)ylsulfate in Kombination mit niedriger schmelzenden Aniontensiden und insbesondere mit solchen Aniontensiden, die einen niedrigeren Krafft-Punkt aufweisen und bei relativ niedrigen Waschtemperaturen von beispielsweise Raumtemperatur bis 40 °C eine geringe Kristallisationsneigung zeigen, einzusetzen. In einer bevorzugten Ausführungsform der Erfindung enthalten die Mittel daher Mischungen aus kurzkettigen und langkettigen Fettalkylsulfaten, vorzugsweise Mischungen aus C₁₂-C₁₄-Fettalkylsulfaten oder C₁₂-C₁₆-Fettalkylsulfaten mit C₁₆-C₁₈-Fettalkylsulfaten. In einer weiteren bevorzugten Ausführungsform der Erfindung werden jedoch nicht nur gesättigte Alkylsulfate, sondern auch ungesättigte Alkenylsulfate mit einer Alkenylkettenlänge von vorzugsweise C₁₆ bis C₂₂ eingesetzt. Dabei sind insbesondere Mischungen aus gesättigten, überwiegend aus C₁₆ bestehenden sulfierten Fettalkoholen und ungesättigten, überwiegend aus C₁₈ bestehenden sulfierten Fettalkoholen bevorzugt, beispielsweise solche, die sich von festen oder flüssigen Fettalkoholmischungen des Typs HD-Ocenol ^{(R)} (Handelsprodukt des Anmelders) ableiten. Dabei sind Gewichtsverhältnisse von Alkylsulfaten zu Alkenylsulfaten von 10:1 bis 1:2 und insbesondere von etwa 5:1 bis 1:1 bevorzugt.

Auch die Schwefelsäuremonoester der mit 1 bis 6 Mol Ethylenoxid ethoxylierten geradkettigen oder verzweigten C₇-C₂₁-Alkohole, wie 2-Methyl-verzweigte C₉-C₁₁-Alkohole mit im Durchschnitt 3,5 Mol Ethylenoxid (E0) oder C₁₂-C₁₈-Fettalkohole mit 2 bis 4 E0, sind geeignet. Sie werden in Waschmitteln aufgrund ihres hohen Schaumverhaltens nur in relativ geringen Mengen, beispielsweise in Mengen von 1 bis 5 Gew.-%, eingesetzt.

Weitere bevorzugte Aniontenside sind die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈- bis C₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Bevorzugte Aniontensid-Mischungen enthalten Kombinationen aus Fettalkoholsulfaten, sulfierten Fettsäureglycerinestern, Alkylbenzolsulfonaten, α-Sulfofettsäuremethylestern und/oder Sulfosuccinaten. Insbesondere sind hierbei Mischungen bevorzugt, die als anionische Tenside Fettalkoholsulfate, insbesondere Mischungen aus kurzkettigen gesättigten C₁₂-C₁₈-Fettalkoholsulfaten mit geringen Anteilen an C₁₈ und ungesättigte Fettalkoholsulfate, insbesondere Oleylsulfat, sowie Mischungen aus Fettalkoholsulfaten und sulfierten Fettsäureglycerinestern, Fettalkoholsulfaten und Alkylbenzolsulfonaten, Fettalkoholsulfaten und Sulfosuccinaten oder Alkylbenzolsulfonate und Sulfosuccinate in jedem beliebigen Verhältnis enthalten.

Als weitere Inhaltsstoffe kommen Seifen in Betracht. Geeignet sind gesättigte Fettsäureseifen, wie die Salze der Laurinsäure, Myristinsäure, Palmitinsäure oder Stearinsäure, sowie insbesondere aus natürlichen Fettsäuren, z.B. Kokos-, Palmkern- oder Talgfettsäuren, abgeleitete Seifengemische. Insbesondere sind solche Seifengemische bevorzugt, die zu 50 bis 100 Gew.-% aus gesättigten C₁₂-C₁₈-Fettsäureseifen und zu 0 bis 50 Gew.-% aus Ölsäureseife zusammengesetzt sind.

Die anionischen Tenside sowie die Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Als nichtionische Tenside dienen vorzugsweise alkoxylierte, insbesondere ethoxylierte Alkohole, die sich von primären Alkoholen mit vorzugsweise 9 bis 18 Kohlenstoffatomen und durchschnittlich 1 bis 12 Mol Ethylenoxid (E0) ableiten, in denen der Alkoholrest linear oder in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch lineare Reste aus Alkoholen nativen Ursprungs mit 12 bis 18 Kohlenstoffatomen bevorzugt, wie z.B. aus Kokos-, Talgfett- oder Oleylalkohol. Insbesondere sind Alkoholethoxylate bevorzugt, die durchschnittlich 2 bis 8 E0 aufweisen. Zu den bevorzugten nichtionischen Tensiden gehören ethoxylierte Fettalkohole wie C₁₂-C₁₄-Alkohole mit 3 E0 oder 4 E0, C₉-C₁₁-Alkohol mit 7 E0, C₁₃-C₁₅-Alkohole mit 3 E0, 5 E0, 7 E0 oder 8 E0, C₁₂-C₁₈-Alkohole mit 3 E0, 5 E0 oder 7 E0 und Mischungen aus diesen, wie Mischungen aus C₁₂-C₁₄-Alkohol mit 3 E0 und C₁₂-C₁₈-Alkohol mit 5 E0. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE).

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges Tensid oder in Kombination mit anderen nichtionischen Tensiden, insbesondere zusammen mit alkoxylierten Fettalkoholen, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylgruppe, insbesondere Fettsäuremethylester, wie sie beispielsweise in der japanischen Patentanmeldung JP 58/217 598 beschrieben sind oder die vorzugsweise nach dem in der internationalen Patentanmeldung WO-A-90/13533 beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (II), 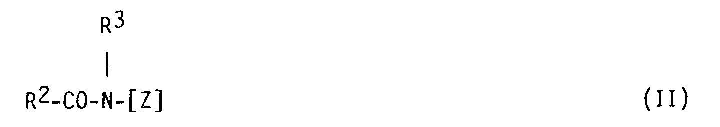 in der R²C0 für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Vorzugsweise enthalten die Mittel 15 bis 35 Gew.-% anionische und nichtionische Tenside, wobei die Gewichtsverhältnisse zwischen den anionischen und nichtionischen Tensiden im allgemeinen zwischen 10:1 und 1:5 liegen.

Außerdem können die erfindungsgemäßen Wasch- oder Reinigungsmittel etwa 15 bis 45 Gew.-% weitere übliche Inhaltsstoffe von Wasch- oder Reinigungsmitteln enthalten. Hierzu gehören beispielsweise Vergrauungsinhibitoren (Schmutzträger), Schauminhibitoren, Bleichmittel und Bleichaktivatoren, optische Aufheller, Enzyme, textilweichmachende Stoffe, Farb- und Duftstoffe sowie Neutralsalze, beispielsweise Natriumsulfat.

Unter den als Bleichmittel dienenden, in Wasser H₂O₂ liefernden Verbindungen haben das Natriumperborat-tetrahydrat und das Natriumperboratmonohydrat besondere Bedeutung. Weitere brauchbare Bleichmittel sind beispielsweise Peroxycarbonat, Peroxypyrophosphate, Citratperhydrate sowie H₂O₂ liefernde persaure Salze oder Persäuren, wie Perbenzoate, Peroxophthalate, Diperazelainsäure oder Diperdodecandisäure. Der Gehalt der Mittel an Bleichmitteln beträgt vorzugsweise 5 bis 25 Gew.-% und insbesondere 10 bis 20 Gew.-%, wobei vorteilhafterweise Perboratmonohydrat eingesetzt wird.

Um beim Waschen bei Temperaturen von 60 °C und darunter eine verbesserte Bleichwirkung zu erreichen, können Bleichaktivatoren in die Präparate eingearbeitet werden. Beispiele hierfür sind mit H₂O₂ organische Persäuren bildende N-Acyl- beziehungsweise O-Acyl-Verbindungen, vorzugsweise N,N'-tetraacylierte Diamine, wie N,N,N',N'-Tetraacetylethylendiamin, ferner Carbonsäureanhydride und Ester von Polyolen wie Glucosepentaacetat. Weitere bekannte Bleichaktivatoren sind acetylierte Mischungen aus Sorbitol und Mannitol, wie sie beispielsweise in der europäischen Patentanmeldung EP-A-0 525 239 beschrieben werden. Der Gehalt der bleichmittelhaltigen Mittel an Bleichaktivator liegt in dem üblichen Bereich, vorzugsweise zwischen 1 und 10 Gew.-% und insbesondere zwischen 3 und 8 Gew.-%.

Vergrauungsinhibitoren haben die Aufgabe, den von der Faser abgelösten Schmutz in der Flotte suspendiert zu halten und so das Vergrauen zu verhindern. Hierzu sind wasserlösliche Kolloide meist organischer Natur geeignet, wie beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die oben genannten Stärkeprodukte verwenden, zum Beispiel abgebaute Stärke, Aldehydstärken usw.. Auch Polyvinylpyrrolidon ist brauchbar. Vorzugsweise werden Carboxymethylcellulose (Na-Salz), Methylcellulose, Hydroxyalkylcellulose und Mischether wie Methylhydroxyethylcellulose, Methylhydroxypropylcellulose und deren Gemische sowie Polyvinylpyrrolidon, insbesondere in Mengen von 0,5 bis 5 Gew.-%, bezogen auf das Mittel, eingesetzt.

Zusätzlich können die Mittel auch Komponenten enthalten, welche die Öl- und Fettauswaschbarkeit aus Textilien positiv beeinflussen. Dieser Effekt wird besonders deutlich, wenn ein Textil verschmutzt wird, das bereits vorher mehrfach mit einem erfindungsgemäßen Waschmittel, das diese öl- und fettlösende Komponente enthält, gewaschen wird. Zu den bevorzugten öl- und fettlösenden Komponenten zählen beispielsweise nichtionische Celluloseether wie Methylhydroxypropylcellulose mit einem Anteil an Methoxyl-Gruppen von 15 bis 30 Gew.-% und an Hydroxypropoxyl-Gruppen von 1 bis 15 Gew.-%, jeweils bezogen auf den nichtionischen Celluloseether, sowie die aus dem Stand der Technik bekannten Polymere der Phthalsäure und/oder der Terephthalsäure bzw. von deren Derivaten, insbesondere Polymere aus Ethylenterephthalaten und/oder Polyethylenglykolterephthalaten.

Das Schäumvermögen der Tenside läßt sich durch Kombination geeigneter Tensidtypen steigern oder verringern; eine Verringerung läßt sich ebenfalls durch Zusätze nichttensidartiger organischer Substanzen erreichen. Ein verringertes Schäumvermögen, das beim Arbeiten in Maschinen erwünscht ist, erreicht man vielfach durch Kombination verschiedener Tensidtypen, zum Beispiel von Sulfaten und/oder Sulfonaten mit nichtionischen Tensiden und/oder mit Seifen. Bei Seifen steigt die schaumdämpfende Wirkung mit dem Sättigungsgrad und der C-Zahl des Fettsäureesters an. Als schauminhibierende Seifen eignen sich daher solche Seifen natürlicher und synthetischer Herkunft, die einen hohen Anteil an C₁₈-C₂₄-Fettsäuren aufweisen. Geeignete nichttensidartige Schauminhibitoren sind Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bistearylethylendiamid. Mit Vorteil werden auch Gemische verschiedener Schauminhibitoren verwendet, zum Beispiel solche aus Silikonen und Paraffinen oder Wachsen. Vorzugsweise sind die Schauminhibitoren an eine granulare, in Wasser lösliche beziehungsweise dispergierbare Trägersubstanz gebunden. Insbesondere sind dabei Mischungen aus Silikonen und/oder Paraffinen und/oder Bistearylethylendiamid bevorzugt, wobei mindestens zwei dieser drei Komponenten eingesetzt werden.

Die Waschmittel können als optische Aufheller Derivate der Diaminostilbendisulfonsäure beziehungsweise deren Alkalimetallsalze enthalten. Geeignet sind zum Beispiel Salze der 4,4'-Bis(2-anilino-4-morpholino-1,3,5-triazin-6-yl-amino)-stilben-2,2'-disulfonsäure oder gleichartig aufgebaute Verbindungen, die anstelle der Morpholinogruppe eine Diethanolaminogruppe, eine Methylaminogruppe, eine Anilinogruppe oder eine 2-Methoxyethylaminogruppe tragen. Weiterhin können Aufheller vom Typ des substituierten 4,4'-Distyryldiphenyls anwesend sein; zum Beispiel die Verbindung 4,4'-Bis(4-chlor-3-sulfostyryl)-diphenyl. Auch Gemische der vorgenannten Aufheller können verwendet werden.

Als Enzyme kommen solche aus der Klasse der Proteasen, Lipasen, Amylasen, Cellulasen bzw. deren Gemische in Frage. Besonders gut geeignet sind aus Bakterienstämmen oder Pilzen, wie Bacillus subtilis, Bacillus licheniformis und Streptomyces griseus gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase oder Protease und Cellulase oder aus Cellulase und Lipase oder aus Protease, Amylase und Lipase oder Protease, Lipase und Cellulase, von besonderem Interesse. Auch Peroxidasen oder Oxidasen haben sich in einigen Fällen als geeignet erwiesen. Die Enzyme können an Trägerstoffen adsorbiert und/oder in Hüllsubstanzen eingebettet sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,1 bis etwa 2 Gew.-% betragen.

Als Stabilisatoren insbesondere für Perverbindungen und Enzyme kommen die Salze von Polyphosphonsäuren, insbesondere von 1-Hydroxyethan-1,1-diphosphonsäure (HEDP), Diethylentriaminpentamethylenphosphonsäure (DETPMP) oder Ethylendiamintetramethylenphosphonsäure (EDTMP) in Betracht.

Die vorzugsweise pulverförmigen bis granularen Mittel weisen im allgemeinen ein Schüttgewicht zwischen 300 und 1200 g/l, vorzugsweise von 500 bis 1100 g/l und insbesondere von oberhalb 600 g/l auf. Insbesondere Mittel mit Schüttgewichten oberhalb 500 g/l können außerdem Bestandteile enthalten, welche die Löslichkeit der verdichteten Granulate verbessern. Derartige Bestandteile werden beispielsweise in den älteren deutschen Patentanmeldungen P 41 24 701.9 und P 42 03 031.5 beschrieben. Zu den bevorzugt eingesetzten Bestandteilen gehören insbesondere Fettalkohole mit 20 bis 80 Mol Ethylenoxid pro Mol Fettalkohol, beispielsweise Talgfettalkohol mit 30 EO und Talgfettalkohol mit 40 E0, aber auch Fettalkohole mit beispielsweise 14 E0, sowie Polyethylenglykole mit einer relativen Molekülmasse zwischen 200 und 2000.

Die Mittel lassen sich durch die bekannten Herstellungsverfahren wie Sprühtrocknung, Misch-, Granulier- und/oder Extrudierverfahren herstellen. Dabei ist es auch möglich, daß eine Gerüststoffkombination, die ein Terpolymer, hergestellt gemäß der Offenbarung der WO-A-94/15978 aus den Monomereinheiten einer monoethylenisch ungesättigten C₃-C₈-Monocarbonsäure, einer monoethylenisch ungesättigten C₄-C₈-Dicarbonsäure und Vinylalkohol und/oder einem Vinylalkohol-Derivat und/oder den Salzen einer monoethylenisch ungesättigten C₃-C₈-Monocarbonsäure und einer monoethylenisch ungesättigten C₄-C₈-Dicarbonsäure sowie Vinylalkohol und/oder einem Vinylalkohol-Derivat enthält, in Form eines Compounds als Zumischkomponente zu anderen granularen Bestandteilen von Wasch- oder Reinigungsmitteln eingesetzt wird. Diese Gerüststoffkombination kann ebenfalls durch Mischen, Granulieren, Extrudieren und/oder durch Sprühtrocknung hergestellt werden, wobei granulierte oder extrudierte Compounds bevorzugt sind.

Derartige Gerüststoffkombinationen sind ebenfalls Gegenstand der Erfindung. Sie enthalten als copolymere Polycarbonsäure und/oder als copolymeres Polycarboxylat ein Terpolymer, hergestellt nach der Lehre der WO-A-94/15978 aus den Monomeren einer monoethylenisch ungesättigten C₃-C₈-Monocarbonsäure, einer monoethylenisch ungesättigten C₄-C₈-Dicarbonsäure und Vinylalkohol und/oder einem Vinylalkohol-Derivat und/oder den Salzen einer monoethylenisch ungesättigten C₃-C₈-Monocarbonsäure und einer monoethylenisch ungesättigten C₄-C₈-Dicarbonsäure sowie Vinylalkohol und/oder einem Vinylalkohol-Derivat, wobei ein Terpolymer aus den Salzen der Säuren und Vinylalkohol bevorzugt ist. Bevorzugte Gerüststoffkombinationen enthalten ein Terpolymer, das zu 60 bis 95 Gew.-%, vorzugsweise 70 bis 92 Gew.-% aus (Meth)acrylsäure bzw. (Meth)acrylat, vorzugsweise Acrylsäure bzw. Acrylat, und Maleinsäure bzw. Maleat und zu 5 bis 40 Gew.-%, vorzugsweise 8 bis 30 Gew.-% und insbesondere 10 bis 20 Gew.-% Vinylalkohol und/oder Vinylacetat besteht, wobei das Gewichtsverhältnis (Meth)acrylsäure bzw. (Meth)acrylat zu Maleinsäure bzw. Maleat zwischen 1:1 und 4:1, vorzugsweise zwischen 2:1 und 3:1 und insbesondere zwischen 2:1 und 2,5:1 liegt, wobei sowohl die Mengen als auch die Gewichtsverhältnisse auf die Säuren bezogen sind und ein Terpolymer aus den Salzen der Säuren und Vinylalkohol bevorzugt ist.

In einer weiteren bevorzugten Ausführungsform enthalten die Gerüststoffkombinationen 50 bis 70 Gew.-%, vorzugsweise 55 bis 65 Gew.-% kristalline Schichtsilikate (I) oder eine Mischung aus kristallinen Schichtsilikaten (I) und Zeolith, insbesondere kristalline Schichtsilikate (I) und Zeolith.

Die Gerüststoffkombinationen können auch zusätzlich flüssige bis wachsartige Komponenten, vorzugsweise nichtionische Tenside, enthalten. Derartige Gerüststoffkombinationen werden vorzugsweise durch Aufbereitung einer Gerüststoffkombination hergestellt, indem diese mit den flüssigen bis wachsartigen Komponenten, insbesondere mit nichtionischen Tensiden, besprüht wird.

### Beispiele

### Beispiel 1:

Es wurden granulare Waschmittel nachstehender Zusammensetzung (erfindungsgemäßes Mittel sowie Vergleichsbeispiel V1) in herkömmlicher Weise durch Sprühtrocknung hergestellt und getestet. Dabei wurden in ein Terpolymer, das aus 80 Gew.-% Acrylsäure und Maleinsäure im Gewichtsverhältnis 7:3 sowie aus 20 Gew.-% Vinylacetat gemäß der Offenbarung der WO-A-94/015978 hergestellt und anschließend vollständig neutralisiert worden war, wobei die Vinylacetat-Gruppe vollständig in eine Vinylalkoholgruppe umgewandelt wurde, und in V1 ein copolymeres Polycarboxylat aus einem Acrylat-Maleat-Copolymer (Sokalan CP5^{(R)}, Handelsprodukt der BASF, Bundesrepublik Deutschland) sowie Perborat, Tetraacetylethylendiamin (TAED), das Enzymgranulat, enthaltend Protease und Lipase, und das Entschäumergranulat auf Basis von Paraffinöl zu dem ansonsten sprühgetrockneten Produkt hinzugemischt.

| Zusammensetzung | (in Gew.-%) |
|---|---|
| C₉-C₁₃-Alkylbenzolsulfonat-natriumsalz | 9 |
| Talgfettalkoholsulfat | 4 |
| C₁₂-C₁₈-Fettalkohol mit 5 E0 | 4,3 |
| Talgfettalkohol mit 5 E0 | 1,8 |
| C₁₂-C₁₈-Fettsäureseife-natriumsalz | 0,8 |
| Zeolith (wasserfreie Aktivsubstanz) | 23,5 |
| Natriumcarbonat | 12,6 |
| amorphes Natriumsilikat (Na₂O:SiO₂ 1:2) | 3 |
| Perboratmonohydrat | 16 |
| TAED | 5,5 |
| Carboxymethylcellulose/Methylcellulose | 0,25 |
| Enzymgranulat | 1 |
| Entschäumergranulat | 0,2 |
| optischer Aufheller | 0,2 |
| Wasser | 11 |
| Terpolymer bzw. Sokalan CP 5^{(R)} | 5,5 |
| Salze aus Rohstoffen | Rest |

Die Prüfung erfolgte unter praxisnahen Bedingungen in Haushaltswaschmaschinen. Hierzu wurden die Maschinen mit 3,5 kg sauberer Füllwäsche und 0,5 kg Testgewebe beschickt, wobei das Testgewebe zum Teil mit üblichen Testanschmutzungen zur Prüfung des Primärwaschvermögens imprägniert war und zum Teil zur Prüfung des Sekundärwaschvermögens aus weißem Gewebe bestand. Als Testgewebe wurden Streifen aus standardisiertem Baumwollgewebe (Wäschereiforschungsanstalt Krefeld, WFK), Wirkware (Baumwolltrikot, B), Nessel (BN) und Frottiergewebe (FT) verwendet.
- Waschbedingungen:: Leitungswasser von 23 °d (äquivalent zu 230 mg CaO/l), eingesetzte Waschmittelmenge pro Mittel und Maschine 98 g,
Waschtemperatur 25 bis 90 °C (Aufheizzeit 60 Minuten, 15 Minuten bei 90 °C),
Flottenverhältnis (kg Wäsche : Liter Waschlauge im Hauptwaschgang) 1:5,7,
4maliges Nachspülen mit Leitungswasser, Abschleudern, Trocknen.

Die Primärwaschleistungen der Mittel M1 und V1 waren erwartungsgemäß vergleichbar.

Nach 25 Waschzyklen wurde der Aschegehalt der Textilproben quantitativ bestimmt. Das erfindungsgemäße Mittel zeigte sowohl an den Einzelgeweben als auch im Durchschnitt über alle Gewebe bessere Aschegehalte als das Vergleichsbeispiel V1.

Analoge Ergebnisse wurden mit Mitteln erzielt, die durch Granulierung oder Extrusion hergestellt wurden. Analoge Ergebnisse wurden mit einem Mittel erzielt, das ein Terpolymer, hergestellt gemäß der Offenbarung der WO-A-94/15978 aus 89 Gew.-% Acrylsäure und Maleinsäure im Gewichtsverhältnis 7:3 sowie aus 11 Gew.-% Vinylacetat, enthielt.

| Gew.-% Asche | | | | | |
|---|---|---|---|---|---|
| | FT | BN | B | WFK | 0̸ |
| Anfangswert | 0,56 | 0,10 | 1,14 | 0,26 | 0,52 |
| M1 | 1,19 | 2,17 | 2,00 | 3,85 | 2,30 |
| V1 | 1,82 | 2,29 | 2,08 | 4,22 | 2,60 |

Ein Mittel, welches 25 Gew.-% SKS-6^{(R)} (kristallines Disilikat, Handelsprodukt der Firma Hoechst AG, Bundesrepublik Deutschland), 10 Gew.-% Natriumcarbonat und 5,5 Gew.-% Terpolymer (11 Gew.-% Vinylacetat) enthielt und ansonsten analog zu M1 zusammengesetzt war, aber keinen Zeolith enthielt, wies im Vergleich mit einem analogen Mittel, das als einzigen Unterschied statt des Terpolymers Sokalan CP 5^{(R)} enthielt, eine verbesserte Vergrauungsinhibierung auf.

## Patentansprüche

1. Wasch- oder Reinigungsmittel, insbesondere ein Textilwaschmittel, enthaltend 5 bis 60 Gew.-% anionische, nichtionische und/oder kationische Tenside, 10 bis 65 Gew.-% kristalline Schichtsilikate der allgemeinen Formel (I) NaMSiₓO₂ₓ₋₁·yH₂O, wobei M Natrium oder Wasserstoff bedeutet, X eine Zahl von 1,9 bis 4 und y eine Zahl von 0 bis 20 ist, oder ein Gemisch aus kristallinen Schichtsilikaten (I) und wasserhaltigem Zeolith sowie 2 bis 20 Gew.-% terpolymere Polycarbonsäuren und/oder terpolymere Polycarboxylate, aufgebaut aus den Monomereinheiten einer monoethylenisch ungesättigten C₃-C₁₀-Monocarbonsäure, einer monoethylenisch ungesättigten Dicarbonsäure sowie eines monoethylenisch ungesättigten C₂-C₆-Alkohols oder eines Derivats hiervon, dadurch gekennzeichnet, daß es ein biologisch abbaubares Terpolymer aus den Monomereinheiten einer monoethylenisch ungesättigten C₃-C₈-Monocarbonsäure, einer monoethylenisch ungesättigten C₄-C₈-Dicarbonsäure und Vinylalkohol und/oder einem Vinylalkohol-Derivat und/oder den Salzen einer monoethylenisch ungesättigten C₃-C₈-Monocarbonsäure und einer monoethylenisch ungesättigten C₄-C₈-Dicarbonsäure sowie Vinylalkohol und/oder einem Vinylalkohol-Derivat enthält, das durch radikalische Polymerisation und Hydrolyse oder Verseifung in wäßrigem Medium hergestellt ist.

2. Mittel nach Anspruch 1, dadurch gekennzeichnet, daß das Terpolymer zu 60 bis 95 Gew.-%, vorzugsweise 70 bis 92 Gew.-% aus (Meth)acrylsäure bzw. (Meth)acrylat, vorzugsweise Acrylsäure bzw. Acrylat, und Maleinsäure bzw. Maleat und zu 5 bis 40 Gew.-%, vorzugsweise 8 bis 30 Gew.-% und insbesondere 10 bis 20 Gew.-% Vinylalkohol und/oder Vinylacetat enthält, wobei das Gewichtsverhältnis (Meth)acrylsäure bzw. (Meth)acrylat zu Maleinsäure bzw. Maleat zwischen 1:1 und 4:1 liegt, vorzugsweise größer als 1:1 ist und insbesondere zwischen 2:1 und 3:1 liegt, sowohl die Mengen als auch die Gewichtsverhältnisse auf die Säuren bezogen sind und ein Terpolymer aus den Salzen der Säuren und Vinylalkohol bevorzugt ist

3. Mittel nach Anspruch 1 oder 2, dadurch gekennzeichnet, daß es 0,5 bis 30 Gew.-%, vorzugsweise 2 bis 25 Gew.-% Terpolymer, 0 bis 20 Gew.-%, vorzugsweise 5 bis 15 Gew.-% anorganische Carbonate und/oder Bicarbonate und 0 bis 20, vorzugsweise 5 bis 15 Gew.-% Salze organischer Polycarbonsäuren umfaßt.

4. Mittel nach einem der Ansprüche 1 bis 3, dadurch gekennzeichnet, daß es 20 bis 40 Gew.-% kristalline Schichtsilikate (I) oder eine Mischung aus kristallinen Schichtsilikaten (I) und Zeolith, 5 bis 15 Gew.-% Natriumcarbonat, 0 bis 10, vorzugsweise 2 bis 5 Gew.-% amorphe Silikate und 3 bis 15 Gew.-% Terpolymer enthält.

5. Mittel nach einem der Ansprüche 1 bis 4, dadurch gekennzeichnet, daß es 10 bis 35 Gew.-%, vorzugsweise 12,5 bis 30 Gew.-% kristalline Schichtsilikate (I) und 2 bis 10 Gew.-%, vorzugsweise 2,5 bis 8 Gew.-% Terpolymer sowie gegebenenfalls 2 bis 10 Gew.-% Carbonate und/oder Bicarbonate enthält, insbesondere aber frei von Zeolith ist.

6. Mittel nach einem der Ansprüche 1 bis 5, dadurch gekennzeichnet, daß es Terpolymer und übliche homo- oder copolymere Acrylate im Gewichtsverhältnis 2:3 bis 3:2 enthält.

7. Mittel nach einem der Ansprüche 1 bis 6, dadurch gekennzeichnet, daß es Terpolymer und Salze organischer Polycarbonsäuren im Verhältnis 1:4 bis 4:1 enthält.

8. Mittel nach einem der Ansprüche 1 bis 7, dadurch gekennzeichnet, daß es 10 bis 40 Gew.-% Tenside sowie 15 bis 45 Gew.-% weitere übliche Inhaltsstoffe von Wasch- und Reinigungsmitteln enthält und ein Schüttgewicht von 300 bis 1200 g/l, vorzugsweise von 500 bis 1100 g/l und insbesondere von oberhalb 600 g/l aufweist.

9. Gerüststoffkombination, enthaltend 1 bis 30 Gew.-% (co-)polymere Polycarbonsäuren und/oder Polycarboxylate, und 50 bis 70 Gew.-%, vorzugsweise 55 bis 65 Gew-% kristalline Schichtsilikate (I) oder eine Mischung aus kristallinen Schichtsilikaten (I) und Zeolith, insbesondere kristalline Schichtsilikate (I) und Zeolith im Gewichtsverhältnis 1:1 oder darunter, dadurch gekennzeichnet, daß sie als copolymere Polycarbonsäuren und/oder als copolymeres Polycarboxylat ein biologisch abbaubares Terpolymer aus den Monomereinheiten einer monoethylenisch ungesättigten C₃-C₈-Monocarbonsäure, einer monoethylenisch ungesättigten C₄-C₈-Dicarbonsäure und Vinylalkohol und/oder einem Vinylalkohol-Derivat und/oder den Salzen einer monoethylenisch ungesättigten C₃-C₈-Monocarbonsäure und einer monoethylenisch ungesättigten C₄-C₈-Dicarbonsäure sowie Vinylalkohol und/oder einem Vinylalkohol-Derivat enthält, das durch radikalische Polymerisation und Hydrolyse oder Verseifung in wäßrigem Medium hergestellt wurde, wobei ein Terpolymer aus den Salzen der Säuren und Vinylalkohol bevorzugt ist.

10. Gerüststoffkombination nach Anspruch 9, dadurch gekennzeichnet, daß das Terpolymer zu 60 bis 95 Gew.-%, vorzugsweise 70 bis 92 Gew.-% aus (Meth)acrylsäure bzw. (Meth)acrylat, vorzugsweise Acrylsäure bzw. Acrylat, und Maleinsäure bzw. Maleat und zu 5 bis 40 Gew.-%, vorzugsweise 8 bis 30 Gew.-% und insbesondere 10 bis 20 Gew.-% Vinylalkohol und/oder Vinylacetat besteht, wobei das Gewichtsverhältnis (Meth)acrylsäure bzw. (Meth)acrylat zu Maleinsäure bzw. Maleat zwischen 1:1 und 4:1 liegt, vorzugsweise größer als 1:1 ist und insbesondre zwischen 2:1 und 3:1 liegt, sowohl die Mengen als auch die Gewichtsverhältnisse auf die Säuren bezogen sind und ein Terpolymer aus den Salzen der Säuren und Vinylalkohol bevorzugt ist.

11. Gerüststoffkombination nach einem der Ansprüche 9 oder 10, dadurch gekennzeichnet, daß sie 5 bis 30 Gew.-%, vorzugsweise 5 bis 25 Gew.-% Natriumcarbonat, 0 bis 10 Gew.-%, vorzugsweise 2 bis 8 Gew.-% amorphe Silikate, 0 bis 8 Gew.-%, vorzugsweise 0,5 bis 5 Gew.-% und insbesondere bis 2 Gew.-% übliche (co-)polymere Acrylate und 0 bis 25 Gew.-%, vorzugsweise 2 bis 20 Gew.-% und insbesondere 5 bis 20 Gew.-% Salze organischer Polycarbonsäuren enthalten

12. Gerüststoffkombination nach einem der Ansprüche 9 bis 11, dadurch gekennzeichnet, daß sie flüssige bis wachsartige Komponenten, vorzugsweise nichtionische Tenside, enthält.

13. Verfahren zur Herstellung einer Gerüststoffkombination gemäß einem der Ansprüche 9 bis 11, dadurch gekennzeichnet, daß sie durch Mischen, Granulieren, Extrudieren und/oder durch Sprühtrocknung hergestellt wird.

14. Verfahren zur Herstellung einer Gerüststoffkombination gemäß Anspruch 13 durch Aufbereitung einer Gerüststoffkombination nach einem der Ansprüche 9 bis 11, dadurch gekennzeichnet, daß sie mit flüssigen bis wachsartigen Komponenten, vorzugsweise mit nichtionischen Tensiden, besprüht wird

15. Verfahren zur Herstellung eines Wasch- oder Reinigungsmittels, insbesondere eines Textilwaschmittels nach einem der Ansprüche 1 bis 8, dadurch gekennzeichnet, daß das Granulat durch Sprühtrocknung hergestellt wird.

16. Verfahren zur Herstellung eines Wasch- oder Reinigungsmittels, insbesondere eines Textilwaschrnittels nach einem der Ansprüche 1 bis 8, dadurch gekennzeichnet, daß das Granulat durch ein Misch-, Granulier- und/oder Extrudierverfahren hergestellt wird.

17. Verfahren zur Herstellung eines Wasch- oder Reinigungsmittels, insbesondere eines Textilwaschmittels nach einem der Ansprüche 1 bis 8, dadurch gekennzeichnet, daß eine Gerüststoffkombination, die ein biologisch abbaubares Terpolymer aus den Monomereinheiten einer monoethylenisch ungesättigten C₃-C₈-Monocarbonsäure, einer monoethylenisch ungesättigten C₄-C₈-Dicarbonsäure und Vinylalkohol und/oder einem Vinylalkohol-Derivat und/oder den Salzen einer monoethylenisch ungesättigten C₃-C₈-Monocarbonsäure und einer monoethylenisch ungesättigten C₄-C₈-Dicarbonsäure sowie Vinylalkohol und/oder einem Vinylalkohol-Derivat enthält, in Form eines sprühgetrockneten, granulierten oder extrudierten Compounds als Zumischkomponente zu anderen granularen Bestandteilen von Wasch- oder Reinigungsmitteln eingesetzt wird.

## Claims

1. A detergent or cleaning composition, more particularly a laundry detergent, containing 5 to 60% by weight of anionic, nonionic and/or cationic surfactants, 10 to 65% by weight of crystalline layer silicates corresponding to general formula (I): NaMSiₓO₂ₓ₊₁·yH₂O, where M is sodium or hydrogen, x is a number of 1.9 to 4 and y is a number of 0 to 20, or a mixture of crystalline layer silicates (I) and water-containing zeolite and 2 to 20% by weight of terpolymeric polycarboxylic acids and/or terpolymeric polycarboxylates produced from the monomer units of a monoethylenically unsaturated C₃₋₁₀ monocarboxylic acid, a monoethylenically unsaturated dicarboxylic acid and a monoethylenically unsaturated C₂₋₆ alcohol or a derivative thereof, characterized in that it contains a biologically degradable terpolymer of the monomer units of a monoethylenically unsaturated C₃₋₈ monocarboxylic acid, a monoethylenically unsaturated C₄₋₈ dicarboxylic acid and vinyl alcohol and/or a vinyl alcohol derivative and/or the salts of a monoethylenically unsaturated C₃₋₈ monocarboxylic acid and a monoethylenically unsaturated C₄₋₈ dicarboxylic acid and also vinyl alcohol and/or a vinyl alcohol derivative which is produced by radical polymerization and hydrolysis or saponification in aqueous medium.

2. A detergent or cleaning composition as claimed in claim 1, characterized in that 60 to 95% by weight and preferably 70 to 92% by weight of the terpolymer consists of (meth)acrylic acid or (meth)acrylate, preferably acrylic acid or acrylate, and maleic acid or maleate and 5 to 40% by weight, preferably 8 to 30% by weight and more preferably 10 to 20% by weight of vinyl alcohol and/or vinyl acetate, the ratio by weight of (meth)acrylic acid or (meth)acrylate to maleic acid or maleate being 1:1 to 4:1, preferably greater than 1:1 and, more preferably, between 2:1 and 3:1, both the quantities and the ratios by weight being based on the acids and a terpolymer of the salts of the acids and vinyl alcohol being preferred.

3. A detergent or cleaning composition as claimed in claim 1 or 2, characterized in that it contains 0.5 to 30% by weight and preferably 2 to 25% by weight of terpolymer, 0 to 20% by weight and preferably 5 to 15% by weight of inorganic carbonates and/or bicarbonates and 0 to 20% by weight and preferably 5 to 15% by weight of salts of organic polycarboxylic acids.

4. A detergent or cleaning composition as claimed in any of claims 1 to 3, characterized in that it contains 20 to 40% by weight of crystalline layer silicates (I) or a mixture of crystalline layer silicates (I) and zeolite, 5 to 15% by weight of sodium carbonate, 0 to 10% by weight and preferably 2 to 5% by weight of amorphous silicates and 3 to 15% by weight of terpolymer.

5. A detergent or cleaning composition as claimed in any of claims 1 to 4, characterized in that it contains 10 to 35% by weight and preferably 12.5 to 30% by weight of crystalline layer silicates (I) and 2 to 10% by weight and preferably 2.5 to 8% by weight of terpolymer and, optionally, 2 to 10% by weight of carbonates and/or bicarbonates, but in particular is free from zeolite.

6. A detergent or cleaning composition as claimed in any of claims 1 to 5, characterized in that it contains terpolymer and typical homopolymeric or copolymeric acrylates in a ratio by weight of 2:3 to 3:2.

7. A detergent or cleaning composition as claimed in any of claims 1 to 6, characterized in that it contains terpolymer and salts of organic polycarboxylic acids in a ratio of 1:4 to 4:1.

8. A detergent or cleaning composition as claimed in any of claims 1 to 7, characterized in that it contains 10 to 40% by weight of surfactants and 15 to 45% by weight of other typical ingredients of detergents and cleaning compositions and has an apparent density of 300 to 1200 g/l, preferably 500 to 1100 g/l and, more preferably, above 600 g/l.

9. A builder combination containing 1 to 30% by weight of (co)polymeric polycarboxylic acids and/or polycarboxylates and 50 to 70% by weight and preferably 55 to 65% by weight of crystalline layer silicates (I) or a mixture of crystalline layer silicates (I) and zeolite, more particularly crystalline layer silicates (I) and zeolite in a ratio by weight of 1:1 or lower, characterized in that it contains a biologically degradable terpolymer of the monomer units of a monoethylenically unsaturated C₃₋₈ monocarboxylic acid, a monoethylenically unsaturated C₄₋₈ dicarboxylic acid and vinyl alcohol and/or a vinyl alcohol derivative and/or the salts of a monoethylenically unsaturated C₃₋₈ monocarboxylic acid and a monoethylenically unsaturated C₄₋₈ dicarboxylic acid and vinyl alcohol and/or a vinyl alcohol derivative which has been produced by radical polymerization and hydrolysis or saponification in aqueous medium, preferably a terpolymer of the salts of the acids and vinyl alcohol, as the copolymeric polycarboxylic acid and/or copolymeric polycarboxylate.

10. A builder combination as claimed in claim 9, characterized in that 60 to 95% by weight and preferably 70 to 92% by weight of the terpolymer consists of (meth)acrylic acid or (meth)acrylate, preferably acrylic acid or acrylate, and maleic acid or maleate and 5 to 40% by weight, preferably 8 to 30% by weight and more preferably 10 to 20% by weight of vinyl alcohol and/or vinyl acetate, the ratio by weight of (meth)acrylic acid or (meth)acrylate to maleic acid or maleate being 1:1 to 4:1, preferably greater than 1:1 and more preferably from 2:1 to 3:1, both the quantities and the ratios by weight being based on the acids and a terpolymer of the salts of the acids and vinyl alcohol being preferred.

11. A builder combination as claimed in any of claims 9 or 10, characterized in that it contains 5 to 30% by weight and preferably 5 to 25% by weight of sodium carbonate, 0 to 10% by weight and preferably 2 to 8% by weight of amorphous silicates, 0 to 8% by weight, preferably 0.5 to 5% by weight and more preferably up to 2% by weight of typical (co)polymeric acrylates and 0 to 25% by weight, preferably 2 to 20% by weight and more preferably 5 to 20% by weight of salts of organic polycarboxylic acids.

12. A builder combination as claimed in any of claims 9 to 11, characterized in that it contains liquid to wax-like components, preferably nonionic surfactants.

13. A process for the production of the builder combination claimed in any of claims 9 to 11, characterized in that it is produced by mixing, granulation, extrusion and/or by spray drying.

14. A process for the production of the builder combination claimed in claim 13 by treatment of the builder combination claimed in any of claims 9 to 11, characterized in that it is sprayed with liquid to wax-like components, preferably with nonionic surfactants.

15. A process for the production of the detergent or cleaning composition, more particularly the laundry detergent, claimed in any of claims 1 to 8, characterized in that the granules are produced by spray drying.

16. A process for the production of the detergent or cleaning composition, more particularly the laundry detergent, claimed in any of claims 1 to 8, characterized in that the granules are produced by mixing, granulation and/or extrusion.

17. A process for the production of the detergent or cleaning composition, more particularly the laundry detergent, claimed in any of claims 1 to 8, characterized in that a builder combination - containing a biologically degradable terpolymer of the monomer units of a monoethylenically unsaturated C₃₋₈ monocarboxylic acid, a monoethylenically unsaturated C₄₋₈ dicarboxylic acid and vinyl alcohol and/or a vinyl alcohol derivative and/or the salts of a monoethylenically unsaturated C₃₋₈ monocarboxylic acid and a monoethylenically unsaturated C₄₋₈ dicarboxylic acid and also vinyl alcohol and/or a vinyl alcohol derivative - is used in the form of a spray-dried, granulated or extruded compound designed for addition to other granular components of detergents or cleaning compositions.

## Revendications

1. Agent de lavage ou de nettoyage, en particulier agent de lavage pour les textiles, contenant 5 à 60 % en poids de tensioactifs anioniques, non ioniques et/ou cationiques, 10 à 65 % en poids de silicates stratifiés cristallins de la formule générale (I) NaMSiₓO₂ₓ₋₁·yH₂O, dans laquelle M représente le sodium ou l'hydrogène, x correspond à un nombre de 1,9 à 4 et y est un nombre de 0 à 20, ou un mélange de silicates stratifiés cristallins (I) et de zéolithe aqueuse, ainsi que 2 à 20 % en poids d'acides polycarboxyliques terpolymères et/ou de polycarboxylates terpolymères, constitués des unités de monomères d'un acide monocarboxylique en C₃-C₁₀ à insaturation monoéthylénique, d'un acide dicarboxylique à insaturation monoéthylénique et d'un alcool en C₂-C₆ à insaturation monoéthylénique ou d'un dérivé de celui-ci, caractérisé en ce qu'il renferme un terpolymère biodégradable constitué des unités monomères d'un acide monocarboxylique en C₃-C₈ à insaturation monoéthylénique, d'un acide dicarboxylique en C₄-C₈ à insaturation monoéthylénique, et d' alcool vinylique et/ou d'un dérivé d'alcool vinylique et/ou des sels d'un acide monocarboxylique en C₃-C₈ à insaturation monoéthylénique et d'un acide dicarboxylique en C₄-C₈ à insaturation monoéthylénique, ainsi que d'alcool vinylique et/ou d'un dérivé d'alcool vinylique, qui est fabriqué par polymérisation radicalaire et hydrolyse ou saponification en milieu aqueux.

2. Agent selon la revendication 1, caractérisé en ce que le terpolymère renferme 60 à 95, en particulier 70 à 92 % en poids d'acide (méth)acrylique ou de (méth)acrylate, de préférence de l'acide acrylique ou de l'acrylate et d'acide maléique ou de maléate, et 5 à 40, de préférence 8 à 30 et, en particulier 10 à 20 % en poids d'alcool vinylique et/ou d'acétate vinylique, le rapport pondéral entre l'acide (méth)acrylique ou le (méth)acrylate et l'acide maléique ou le maléate étant compris entre 1:1 et 4:1, de préférence supérieur à 1:1 et se situant en particulier entre 2:1 et 3:1, tant les proportions que les rapports pondéraux se rapportant aux acides et un terpolymère à base des sels des acides et d'alcool vinylique étant préféré.

3. Agent selon la revendication 1 ou 2, caractérisé en ce qu'il renferme 0,5 à 30, de préférence, 2 à 25 % en poids de terpolymère, 0 à 20, en particulier 5 à 15 % en poids de carbonates et/ou de bicarbonates inorganiques, et 0 à 20, de préférence 5 à 15 % en poids de sels d'acides polycarboxyliques organiques.

4. Agent selon une des revendications 1 à 3, caractérisé en ce qu'il renferme 20 à 40 % en poids de silicates stratifiés cristallins (I) ou un mélange de silicates stratifiés cristallins (I) et de zéolithe, 5 à 15 % en poids de carbonate de sodium, 0 à 10, de préférence 2 à 5 % en poids, de silicates amorphes et 3 à 15 % en poids de terpolymère.

5. Agent selon une des revendications 1 à 4, caractérisé en ce qu'il renferme 10 à 35, de préférence 12,5 à 30 % en poids de silicates stratifiés cristallins (I) et 2 à 10, de préférence 2,5 à 8 % en poids de terpolymère, ainsi que le cas échéant 2 à 10 % en poids de carbonates et/ou de bicarbonates, mais est en particulier exempt de zéolithe.

6. Agent selon une des revendications 1 à 5, caractérisé en ce qu'il contient le terpolymère et des acrylates homo- ou copolymères usuels, dans un rapport pondéral de 2:3 à 3:2.

7. Agent selon une des revendications 1 à 6, caractérisé en ce qu'il contient le terpolymère et des sels d'acides polycarboxyliques organiques, dans un rapport pondéral de 1:4 à 4:1.

8. Agent selon une des revendications 1 à 7, caractérisé en ce qu'il renferme 10 à 40 % en poids de tensioactifs ainsi que 15 à 45 % en poids d'autres constituants usuels d'agents de lavage et de nettoyage, et présente une densité en vrac comprise entre 300 et 1200 g/l, de préférence entre 500 et 1100 g/l et, en particulier, supérieure à 600 g/l.

9. Association d'adjuvants contenant 1 à 30 % en poids d'acides polycarboxyliques et/ou de polycarboxylates (co)polymères et 50 à 70, de préférence 55 à 65 % en poids de silicates stratifiés cristallins (I) ou un mélange de silicates stratifiés cristallins (I) et de zéolithe, en particulier de silicates stratifiés cristallins (I) et de zéolithe dans un rapport pondéral égal ou inférieur à 1:1, caractérisé en ce qu'elle renferme comme acides polycarboxyliques copolymères et/ou comme polycarboxylate copolymère, un terpolymère biodégradable constitué des unités monomères d'un acide monocarboxylique en C₃-C₈ à insaturation monoéthylénique, d'un acide dicarboxylique en C₄-C₈ à insaturation monoéthylénique, et d' alcool vinylique et/ou d'un dérivé d'alcool vinylique et/ou des sels d'un acide monocarboxylique en C₃-C₈ à insaturation monoéthylénique et d'un acide dicarboxylique en C₄-C₈ à insaturation monoéthylénique, ainsi que d'alcool vinylique et/ou d'un dérivé d'alcool vinylique, qui a été fabriqué par polymérisation radicalaire et hydrolyse ou saponification en milieu aqueux.

10. Association d'adjuvants selon la revendication 9, caractérisée en ce que le terpolymère renferme 60 à 95, en particulier 70 à 92 % en poids d'acide (méth)acrylique ou de (méth)acrylate, de préférence de l'acide acrylique ou de l'acrylate et d'acide maléique ou de maléate, et 5 à 40, de préférence 8 à 30 et, en particulier 10 à 20 % en poids d'alcool vinylique et/ou d'acétate vinylique, le rapport pondéral entre l'acide (méth)acrylique ou le (méth)acrylate et l'acide maléique ou le maléate étant compris entre 1:1 et 4:1, de préférence supérieur à 1:1 et se situant en particulier entre 2:1 et 3:1, tant les proportions que les rapports pondéraux se rapportant aux acides et un terpolymère à base des sels des acides et d'alcool vinylique étant préféré.

11. Association d'adjuvants selon une des revendications 9 ou 10, caractérisée en ce qu'elle renferme 5 à 30, de préférence 5 à 25 % en poids de carbonate de sodium, 0 à 10, de préférence 2 à 8 % en poids de silicates amorphes, 0 à 8, de préférence 0,5 à 5 et, en particulier, jusqu'à 2 % en poids d'acrylates (co)polymères usuels, et 0 à 25, de préférence, 2 à 20 et, en particulier, 5 à 20 % en poids de sels d'acides polycarboxyliques.

12. Association d'adjuvants selon une des revendications 9 à 11, caractérisée en ce qu'elle renferme des composants liquides à cireux, de préférence des tensioactifs non ioniques.

13. Procédé de fabrication d'une association d'adjuvants selon une des revendications 9 à 11, caractérisé en ce qu'elle est fabriquée par mélangeage, granulation, extrusion et/ou séchage par pulvérisation.

14. Procédé de fabrication d'une association d'adjuvants selon la revendication 13, par traitement d'une association d'adjuvants selon une des revendications 9 à 11, caractérisé en ce qu'elle est aspergée de composants liquides à cireux, de préférence de tensioactifs non ioniques.

15. Procédé de fabrication d'un agent de lavage ou de nettoyage, en particulier d'un agent de lavage pour les textiles, selon une des revendications 1 à 8, caractérisé en ce que le granulé est fabriqué par séchage par pulvérisation.

16. Procédé de fabrication d'un agent de lavage ou de nettoyage, en particulier d'un agent de lavage pour les textiles, selon une des revendications 1 à 8, caractérisé en ce que le granulé est fabriqué par un procédé de mélangeage, de granulation et/ou d'extrusion.

17. Procédé de fabrication d'un agent de lavage ou de nettoyage, en particulier d'un agent de lavage pour les textiles, selon une des revendications 1 à 8, caractérisé en ce que l'on met en oeuvre une association d'adjuvants, qui renferme un terpolymère biodégradable constitué des unités monomères d'un acide monocarboxylique en C₃-C₈ à insaturation monoéthylénique, d'un acide dicarboxylique en C₄-C₈ à insaturation monoéthylénique, et d'alcool vinylique et/ou d'un dérivé d'alcool vinylique et/ou des sels d'un acide monocarboxylique en C₃-C₈ à insaturation monoéthylénique et d'un acide dicarboxylique en C₄-C₈ à insaturation monoéthylénique, ainsi que d'alcool vinylique et/ou d'un dérivé d'alcool vinylique, sous la forme d'un "compound" séché par pulvérisation, granulé ou extrudé, comme composant d'addition par mélangeage à d'autres constituants granulaires d'agents de lavage ou de nettoyage.
